# EUROPEAN PATENT APPLICATION

(11) **EP 1 872 882 A2**
(43) Date of publication of application: **02.01.2008**
(21) Application number: 06733232.0
(22) Date of filing: 10.03.2006
(51) Int. Cl.: B21D 26/02, B21D 53/78

(54) **METHOD FOR PRODUCING AN ARTICLE BY SUPERPLASTIC SHAPING AND DIFFUSION WELDING**

(30) Priority: 23.03.2005 RU 2005109282
(71) Applicant: Institut Problem Sverkhplastichnosti Metallov Ran, Bashkortostan, 450001 (RU)
(72) Inventor: LUTFULLIN, Ramil Yavatovich, Ufa 450106 (RU); KRUGLOV, Alexei Anatolievich, Ufa 450081 (RU); KAIBYSHEV, Oskar Akramovich, Ufa 450025 (RU)
(74) Representative: Stein, Jan Anders Lennart
(86) International application number: PCT/RU2006/000104
(87) International publication number: WO 2006/101420

(57) **Abstract**

The invention relates to plastic metal forming, particularly to methods of manufacturing articles of titanium alloys by superplastic forming and diffusion welding. The method is particularly applicable to aircraft engine building for manufacturing articles, e.g. fan blades, A method of manufacturing an article by superplastic forming and diffusion welding from at least two workpieces of a titanium alloy, including: marking areas to be and not to be bonded on a surface of at least one of the workpieces; assembling the workpieces into a stack; heating the stack to a predetermined temperature T and applying a pressure of a predetermined value p from a press for diffusion welding of the workpieces together to produce a semifinished article; heating and supplying a pressurized working fluid into the interior of the semifinished article to superplastically form at least one of the workpieces to produce an article of a predetermined shape, **characterized in that** the diffusion welding is carried out through pads of a titanium alloy having a smaller flow stress than that in the workpieces, wherein mainly in the case when the article is made from three or more workpieces a bond preventing material is applied to at least a part of a surface of at least one of the workpieces at the areas not to be bonded.

## Description

The invention relates to metal forming, particularly to methods of manufacturing articles of titanium alloys by superplastic forming and diffusion welding. The method is particularly applicable to aircraft engine building for manufacturing articles, e.g. fan blades.

The present method is an alternative of a method for manufacturing a fan blade from two blanks [1], wherein the blanks are shaped to a predetermined profile and dimensions and then joined together by diffusion welding. As compared to the prior art method, the present method of making fan blades using superplastic forming and diffusion welding offers more extended process capabilities that enable the weight of the article to be reduced to the maximum and stiffening ribs of virtually any geometry to be formed. Three workpieces are generally used, two of the workpieces forming a cover and a third one forming a core shaped as inclined stiffening ribs.

A method for manufacturing an article from two or more workpieces [2] includes the steps of:
(a) marking on the workpieces areas to be and not to be bonded by applying on surfaces of the workpieces a bond preventing material (hereinafter referred to as "stop-off material", except the claims,);
(b) assembling the workpieces into a stack and sealing the stack over a contour;
(c) heating the stack to remove volatile components of the stop-off material;
(d) heating the stack to a temperature T and applying a pressure p to diffusion weld the workpieces together;
(e) internally pressurizing the resulting semi finished article by a working fluid to break the adhesive bond between the workpiece and the stop-off material, the adhesive bond being broken by applying a constant pressure of the working fluid supplied into the semifinished article interior at room temperature;
(g) heating the semifinished article and creating in the interior thereof a working fluid pressure for superplastically forming of at least one workpiece for producing a finished article with stiffening ribs.

Values of pressure and temperature for the diffusion welding are selected with account of a flow stress in the material of the workpieces being joined, the flow stress being, in turn, defined by the alloy grade and the workpiece original structures. For workpieces made from a commercial sheet of Ti-6A1-4V alloy having a grain size of 3-7 µm which are mostly used for manufacturing articles by diffusion welding and superplastic forming, diffusion welding is carried out at a temperature of 850°C and at a pressure of 2 MPa. The pressure can be applied using a press or a working fluid.

Temperature and speed conditions of the forming are selected in accordance with standard superplastic deformation conditions for given alloy.

Another method for manufacturing an article [3] that is most closely related to the present invention includes, in addition to the aforementioned steps of method [2]: heating the semifinished article and applying a deformation load for twisting one end relative to the other end to contour the semifinished article to a predetermined shape. Twisting is carried out at a temperature that is slightly lower that the diffusion welding temperature of 800°C.

The adhesive bond breaking step is performed in methods [2,3] after twisting the semifinished article, therefore special means are required that do not impair the semifinished article shape.

Diffusion welding of workpieces by methods [2,3] gives rise to specific bond defects such as micropores and scores. Microstructure studies of a bond obtained by methods [2,3] show a chained cluster of micropores located mainly over the periphery of bond areas. Scores locate over the periphery of these areas as well.

Therefore, in the bond produced by the closest prior art method the micropores concentrate in immediate proximity to scores, this leading to appearance of weak sections and thereby impairing the bond quality and performance of the article, because fatigue cracks originate precisely from periphery regions.

The number of micropores can be decreased by providing structural changes in the bond, particularly by oriented migration of inter-phase and inter-grain boundaries owing to changed phase composition and grain growth after formation of physical contact. This step is however not provided in method [3].

Furthermore, applying a force to the stop-off material prior to formation of contact at the areas to be bonded makes it possible that stop-off material particles come to the periphery of the areas and additional bond defects appear.

The object of the present invention is to improve the quality of articles by elimination of scores and concentration of micropores at the periphery of bond regions.

Another object of the invention is to further improve the quality of articles by reducing the number of micropores in the bond region.

The object of the invention is attained by a method for manufacturing an article by superplastic forming and diffusion welding from at least two workpieces of a titanium alloy, including: marking on a surface of at least one workpiece areas to be and not to be bonded; assembling the workpieces into a stack; heating the stack to a predetermined temperature T and applying a pressure of a predetermined value p from a press for the diffusion welding the workpieces together and obtain a semifinished article; heating and supplying a pressurized working fluid into the interior of the semifinished article to superplastically form at least one of the workpieces to produce an article of a predetermined shape, characterized in that the diffusion welding is carried out through pads of a titanium alloy having a flow stress smaller than that in the workpieces, wherein mainly in the case when the article is made from three or more workpieces a bond preventing material is applied to least a part of a surface of at least one of the workpieces on the areas not to be bonded.

The object of the invention is further attained by:
using pads from a commercial sheet, the pressure being applied in the heating process when a temperature of (T-100...150)°C is reached;
using pads from a commercial sheet with a prepared structure having a grain size of 0.5-1.0 µm, the pressure being applied in the heating process when a temperature of (T-150...200)°C is reached;
using pads from a commercial sheet with a prepared structure having a grain size of 0.1-0.5 µm, the pressure being applied in the heating process when a temperature of (T-200...250)°C is reached;
after said forming the article is held under a working fluid pressure equal to or greater than p and a temperature not lower than T for 30-60 min;
said holding of the article under a working fluid pressure being performed immediately after the forming step;
the pressure from a press is applied in conditions of external vacuum.

### Technical Matter of the Invention

Experimental microstructure studies of a bond obtained by a present method demonstrated that micropores concentrate mainly in the central part of the areas being bonded as compared to the closest prior art method where micropores concentrate, as previously stated, at the periphery of the bonded areas. Furthermore, no scores were found at the periphery of bond areas. These facts are explained by a changed pattern of stress and deformation distribution when physical contact is formed.

In method [3] the diffusion welding pressure applied to blank workpieces acts initially on the areas, on which a stop-off material was applied, so the stop-off material is pressed into a ductile material of the workpieces. Stresses are distributed in the bond region according to the Prandtl solution in the case of pressing a fixed die with a flat base into a ductile medium [4,5]. Rigid zones with compression stresses are formed in the workpieces being joined, the rigid zones rising to the surface and adjoining the perimeter of the areas with the stop-off material applied. The compression stresses are unfavorable for performing deformation required to form a physical contact, this resulting in appearance of scores and concentration of micropores at the periphery of bond regions.

In the present method owing to the use of pads that are more ductile than the workpieces, distribution of stresses in the bond region approximates to the Prandtl solution in the case of compression of a thin plastic layer of a finished thickness between rigid plates [4,5]. When a pressure is applied to blank workpieces, a rigid zone forms in a pad and rises to the surface in the pad center, while a ductile zone forms over the pad periphery. The presence of the ductile zone facilitates deformation required to form a deformation physical contact, which prevents appearance of scores and concentration of micropores at the periphery of bond regions.

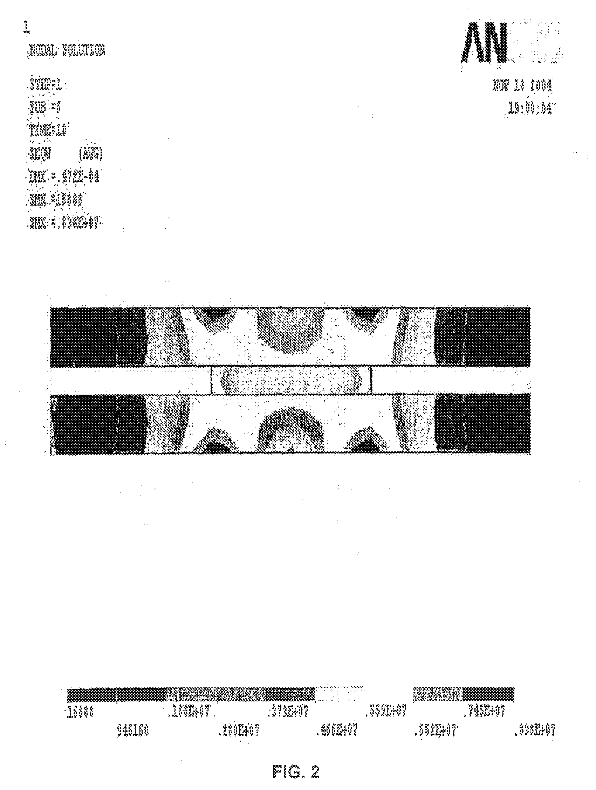

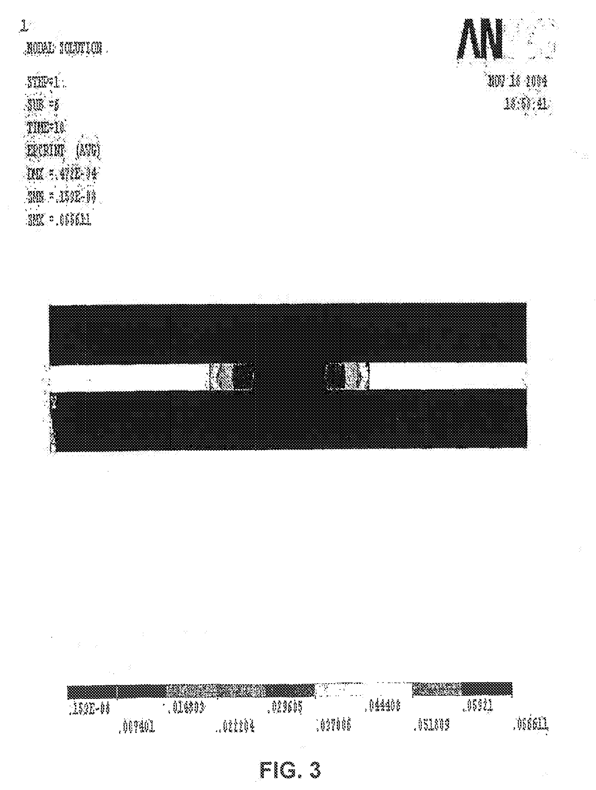

Results of computational modeling prove the aforementioned distribution pattern of stresses (Fig.2) and deformations (Fig.3) in the region of bonding the workpieces through a pad.

Results of theoretical analysis and computational modeling agree with experimental microstructure studies of bonds obtained by the closest prior art method and by the present method and allow the conclusion to be made that appearance of pores and scores at the stage of physical contact formation depends on distribution of stresses in the bond region, and the predominant location of pores and scores corresponds to the location of rigid zones.

In both cases the presence of rigid zones is unfavorable for the deformation that is required to form a physical contact.

But in the present method the score defects are eliminated owing to the absence of rigid zones at the periphery of the bond regions, while micropores concentration defects are distant from the periphery and do not cause formation of hazardous sections.

In the closest prior art method the physical contact is formed by crushing microroughnesses on the surfaces of the workpieces being joined. Confinement of deformation in the pad changes the nature of the physical contact formation process. In this case microroughnesses on the workpiece surface are filled with a more ductile pad material, this assisting in reduction of the number and size of micropores.

As the result the bond quality and performance of the article are improved.

When a stop-off material is used, the pads act as a barrier preventing the stop-off material particles to come in the bond region.

Furthermore, the pads allow the forces to be confined in the areas being bonded, so more powerful press equipment can be used.

The smaller flow stress in titanium alloy pads than that in the workpieces is provided by the use of pads made of the same alloy as the workpieces, but with a smaller grain size. As an alternative, pads can be made of a titanium alloy which has, even at the same or greater grain size, a smaller flow stress than the alloy from which blank workpieces are made.

The difference between grain sizes in the pads and workpieces and/or the concentration gradient of alloying elements and impurities provides more active diffusion processes, this also contributing to the bond quality.

As the pad, by definition, has a smaller thickness than the workpiece, even when the pad is made from a sheet product without a special structure preparation the grain size in the pad will be smaller than that in the blank workpieces.

The pads can be also made from sheet products with a specially prepared submicron (SMC) or nanocrystal (NC) structure having grain sizes less than 1 µm and 0.1 µm, respectively. Special preparation of SMC and NC structure in the pad is fairly simple owing to the small size of the pad.

The smaller the grain size in the pad, the better the pad material fills microroughnesses on the workplace surfaces. This is explained by the fact that, first, the pad grain size is comparable with the size of the smallest microroughnesses on the workpiece surfaces, and second, grain boundary slip processes proceed more actively during deformation and promote filling the microroughnesses. However, in the temperature range from 650°C to 750°C the grain sizes intensely grow in the pad material with an SMC or NC structure. Moreover, the smaller the original grain size, the greater the grain growth speed, Therefore, to use to the maximum the advantages of a specially prepared structure in formation of physical contact it is recommended to apply pressure in the process of heating a stack at a lower temperature than a predetermined temperature for diffusion welding. At the same time at temperatures of about 450°C a flow stress in the pad material becomes greater than that in the workpieces, this impairing the favorable stress distribution pattern. To bring the stress distribution pattern in conformity with the aforementioned Prandtl solution there are suggested optimal temperature ranges taking into account the original pad material structure, that are to be reached when physical contact formation pressure is applied.

In the process of heating and holding for diffusion welding, grains unavoidably grow, and this process is accompanied by migration of boundaries. If physical contact has been already formed, this phenomenon can be efficiently used for decreasing the number and sizes of micropores in the bond region. Under the same conditions phase transformations developing with temperature growth and leading to increased proportion of a more ductile β-phase can be also efficiently used.

As previously stated, in the temperature range of between 700°C and 750°C grain sizes in an SMC or NC structure material intensively grow with a speed by an order of magnitude greater that the grain grown speed in a material with a microcrystalline structure, e.g. in commercial sheet products. That is why, during the time period of diffusion welding, twisting and forming the grain size in the pads will approach the grain size in the workpieces. Therefore, the difference between the original grain sizes in pads and workpieces will not lead to an inadmissibly differently-grained finished article.

To further improve the quality it is recommended after the step of forming to hold the article under an internal working fluid pressure having a value equal to or greater than p. This step can be considered as a continuation of the diffusion welding process. In this case the temperature should not be smaller than T taking into account the preceding grain growth. The increased temperature also contributes to increasing the volume proportion of β-phase which efficiently fills the pores in the conditions of uniform compression. Moreover, the step of holding at temperatures smaller than T under a pressure for a predetermined time period provides completely equalized grain sizes in a finished article.

It is preferable to perform holding of the semifinished article immediately after the step of forming and to use the forming equipment, i.e. in a single process cycle.

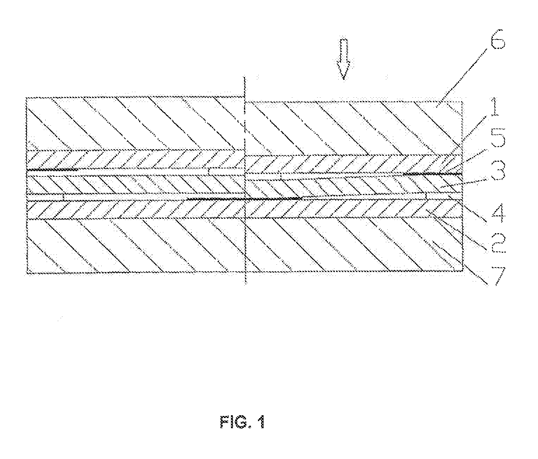

It is advisable to apply pressure for bonding workpieces in conditions of external vacuum. This step is aimed at minimizing the contact area between the workpieces at the areas that are not to be bonded. When an article is made from two workpieces, no contact appears between the workpieces at the areas that are not to be bonded, so the step of applying a stop-off material may be omitted. When an article is made from three or more workpieces, the inner workpiece deflects between pads under the effect of the pressure p, this resulting in the workpieces contacting at the regions that are not to be bonded at an area comparable with the area of pad (Fig.1), therefore, a stop-off material must be applied to at least a corresponding part of the surface. In this case under a pressure p an adhesive bond forms between the workpiece and the stop-off material.

When there is no external vacuum, the outside workpieces can deflect under atmospheric pressure, and this can lead to contact between the workpieces at the areas that are not to be bonded, both in the case of making an article from two or three or more workpieces. The contact area is defined by thickness of the outside workpieces and the distance between the pads. When an article is manufactured from three or more workpieces, a minimum area on which a stop-off material should be applied is determined with account of deflection of both outside and inner workpieces. It should be noted that no adhesive bond will appear between the workpiece and the stop-off material under atmospheric pressure.

The stop-off material can be applied to the entire workpiece surface at the areas that are not to be bonded. The step of applying a stop-off material only on a part of the workpiece surface at the aforementioned areas reduces the labor required for applying a stop-off material.

In any case the workpiece deflection will not lead to a contact between workpieces on the entire area of the regions that are not to be bonded, this providing conditions for free passage of a working fluid into the interior of a semifinished article for forming and breaking the adhesive bond between the workpiece and the stop-off material when the article is manufactured from three or more workpieces. The adhesive bond between a workpiece and a stop-off material will be broken at the initial step of forming at small values of working fluid pressure owing to the fact that the surface area on which the working fluid pressure acts is significantly greater than the area of the adhesively bonded surface.

It should be noted that the use of pads in diffusion welding is known from [6] . Pads are used for joining e.g. aluminum and its alloys with other metals (steel, copper, titanium, etc.). Direct joining of the metals is difficult due to formation of intermetallic compounds (such as FeAl) that make the compound brittle. The pads are also used for joining refractory metals (molybdenum, tungsten) because they require very high temperatures for direct joining. In this case the use is made of pads of materials having a sufficient plasticity at smaller temperatures to fill microroughnesses on the workpiece surfaces in the process of formation of physical contact. Diffusion welding of titanium and its alloys is generally performed without pads owing to the ability of titanium to dissolve oxide films on surfaces being joined in vacuum conditions, and its high plasticity. However the use of pads for bonding titanium alloys is also known. Particularly, in a method [7] a pad is placed between workpieces to be bonded, the pad being made of the same material as the workpiece material, but with the grain size by an order of magnitude smaller that that of the workpieces. This step allows deformation to be confined in the pad, and provides an active grain boundary slip process within the pad volume at significant deformation degrees (at least 0.2). This reduces the number of bond defects such as micropores.

However no scientific and technical document discloses the use of effect of pads on a stress distribution pattern in the bond region of workpieces. According to the present method this property is efficiently used to prevent scores and concentration of micropores at the periphery of bond regions. The present method is not aimed at elimination of micropores since it does not permit the use of deformation degrees required to do this. Nevertheless the effect of ductile pads consisting in better filling of microroughnesses at the workplace surfaces in formation of physical contact, which reduces the number and sizes of micropores, accompanies the principal effect achieved. The additional steps of the present method including: applying a pressure in the process of heating the stack at a temperature lower than a predetermined temperature of diffusion welding so that to efficiently use the grain growth accompanied by migration of boundaries and phase transformations increasing with temperature, which increase the proportion of a more ductile β-phase for reducing the number and sizes of micropores, are unknown either.

The invention will be more fully described by way of example with reference to the accompanying drawings, in which:
Fig.1 shows a schematic diagram of a process of forming a bond according to the present invention where an article is manufactured from three workpieces in conditions of external vacuum:
   before applying a pressure to the left of axis and
   after applying a pressure to the right of axis;
Fig.2 shows a stress distribution diagram in the bond of workpieces joined through a pad;
Fig.3 shows a deformation distribution diagram in the bond of workpieces joined through a pad;
Fig.4 shows a microstructure of a bond region at the periphery of the area being joined (1000-fold magnification) obtained by the closest prior art method;
Fig.5 shows a microstructure of a bond region at the periphery of the area being joined (1000-fold magnification) obtained by a method according to the present invention;
Fig.6 shows a microstructure of a bond region in the central part of the area being joined using pads from a commercial sheet (1000-fold magnification), obtained by a method according to the present invention;
Fig.7 shows a microstructure of a bond region in the central part of the area being joined using pads with an original SMC structure (1000-fold magnification), obtained by a method according to the present invention;
Fig.8 shows a microstructure of a bond region in the central part of the area being joined using pads with an original NC structure (1000-fold magnification), obtained by a method according to the present invention;
Fig.9 shows a cross-sectional view of an article manufactured by a method according to the present invention;
Fig.10 shows a photograph of an article manufactured by a method according to the present invention.
Fig.1 shows cover workpieces 1,2, a core workpiece 3, pads 4, a stop off material 5, an upper movable plate 6 and a lower stationary plate 7 of a punch. Arrow shows a pressure application direction.

### Examples of Implementing the Invention

A hollow fan blade model comprised of covers and a core forming inclined stiffening ribs was manufactured by a present method.

The article was made of a titanium alloy Ti-6Al-4V. The alloy is mostly used for manufacturing articles by diffusion welding and superplastic forming. The article may be however made of other alloys as well. Particularly, covers may be made of less ductile titanium alloys, even of titanium intermetallic compounds. No examples of manufacturing a simpler article from two blank workpieces will be described. In other words, the examples below do not embrace all of the present method capabilities.

Various method steps such as diffusion welding, twisting, superplastic forming, were performed using the values of temperature, pressure and deformation speed known specifically from [2,3].

Example 1. Three workpieces (two for covers and one for a core) of 240 x 160 mm with account of a process zone were cut out from a commercial sheet 1 mm thick having 3 µm grains. Pads were cut out from a commercial sheet 0.3 mm thick with grains 1.5 µm.

Three pads 200 mm long were placed, spaced at 46 mm, on the surface of one cover workpiece: one pad 8 mm wide was arranged in the centre and two pads 20 mm wide were arranged at the ends of the workpiece. Two 8 mm wide pads were placed, also spaced at 46 mm, on the surface of the other workpiece, symmetrically to its central axis. The pads were attached by resistance spot welding. Conditions of the resistance spot welding were selected so that to exclude formation of a cast metal structure. In such a way areas to be and not to be bonded were marked out. A boron nitride-based stop-off material was applied in the form of stripes on the surface of the cover workpieces between the pads. The stripes were applied to central part of the areas not to be bonded. Width of the stop-off material stripes was determined taking into account, first, deflection of the core workpiece under a pressure applied in diffusion welding, and second, deflection of the cover workpieces under atmospheric pressure since the bonding was performed without the use of external vacuum. Based on the pad widths, the cover workpiece thicknesses and the distance between the pads, the width of the stop-off metal stripes was 36 mm at all of the areas not to be bonded. An opening was made in a process zone of one of the cover workpieces, and a gas supply nipple was attached by welding. An opening was also made in a corresponding process zone of the core workpiece. The workpieces were then assembled into a stack and the stack was sealed by resistance spot welding over contour.

To remove volatile components of the stop-off material the resulting stack was placed into an electrical furnace and heated to a temperature of 200°C. Volatile components were removed from the stack interior using a vacuum pump that was coupled via a pipe with a nipple until vacuum of at least 13.3 Pa depth was reached. The stack was then transferred into a heating unit of a press and arranged between flat plates. After heating to a temperature of 850°C and reaching a vacuum depth of at least 1.33 Pa a force was applied from the press to the stack to provide a pressure of 2 MPa, and the stack was held under that pressure for 2 hours to provide diffusion welding. Upon cooling the bonded semifinished article was transferred to a twisting apparatus. The semifinished article end on the nipple side was fixed in a stationary gripping unit, and the opposite end was fixed in a movable gripping unit. After heating to a temperature of 800°C a torque was applied to the movable gripping unit to twist the semifinished article. Upon twisting the semifinished article was clamped over contour between appropriately shaped dies in a punch equipment using wedge joints. The stack nipple was connected to a pipe for supplying a working fluid (argon). The punch was heated in an electrical furnace. Forming was carried out at temperature of 850°C by creation in the stack interior of a gas pressure according to a regime providing deformation of the blank workpieces with a deformation speed within the range from 10⁻³ s⁻¹ to 10⁻² s⁻¹. Maximum gas pressure was 2.5 MPa. After forming the punch was cooled in the furnace to a temperature of 40°C, the article was taken out and the process zones were removed.

Example 2. The Example is similar to Example 1 except that the following steps were added:
in the process of heating the stack to a temperature of 850°C, a force from the press was applied to the stack when a temperature of 750°C was reached to provide a pressure of 2 MPa;
after forming, without cooling the punch and releasing the pressure, temperature was raised to 900°C and pressure was increased to 3 MPa, and the article was held for 40 min.

Example 3. The Example is similar to Example 1 except that the following steps were added:
the pads were made from a strip of a commercial sheet 1 mm thick, which was additionally deformed by rolling in isothermal conditions in three passes to a thickness of 0.25 mm, which provided a grain size of about 0.8 µm in the pads;
in the process of heating the stack to a temperature of 850°C, a force from the press was applied to the stack when a temperature of 700°C was reached to provide a pressure of 2 MPa;
after forming, without cooling the punch and releasing the pressure, temperature was raised to 900°C and pressure was increased to 3 MPa, and the article was held for 40 min.

Example 4. The Example is similar to Example 1 except that the diffusion welding was performed in a vacuum chamber and the following steps were added:
the pads were made from a strip of a commercial sheet 2 mm thick which was additionally deformed by rolling in isothermal conditions in seven passes to a thickness of 0.25 mm, which provided a grain size of about 0.2 µm in the pads;
a width of the stop-off material stripes was by 2 mm greater on both sides than the pad width taking into account the core workpiece deflection under pressure at diffusion welding;
in the process of heating the stack to a temperature of 850°C, a force from the press was applied to the stack when a temperature of 650°C was reached to provide a pressure of 2 MPa;
after forming, without cooling the punch and releasing the pressure, temperature was raised to 900°C and pressure was increased to 3 MPa, and the article was held for 40 min.

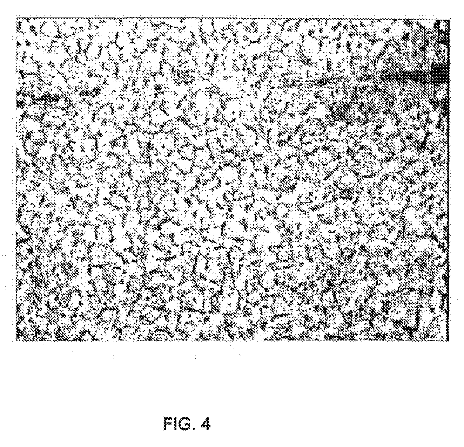

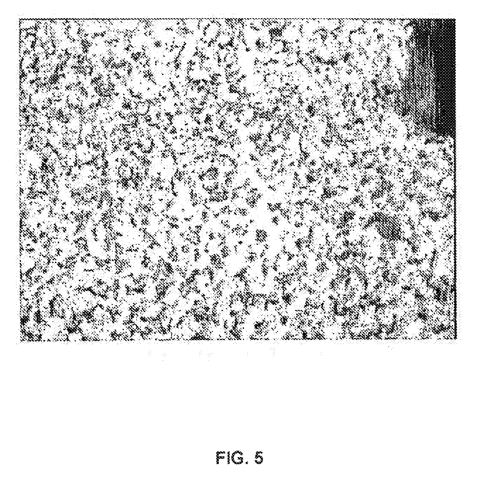

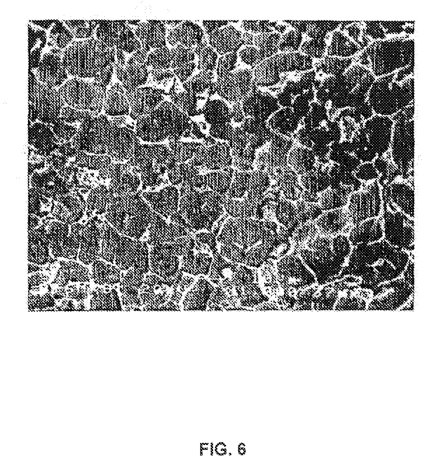

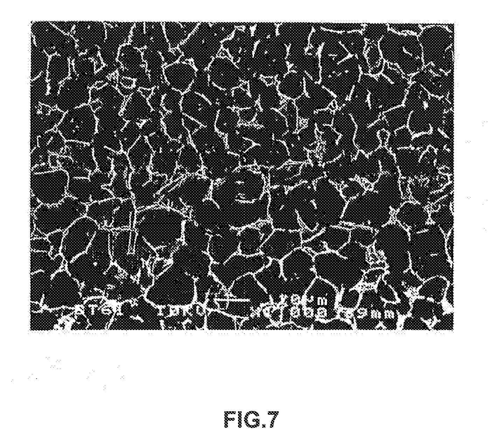

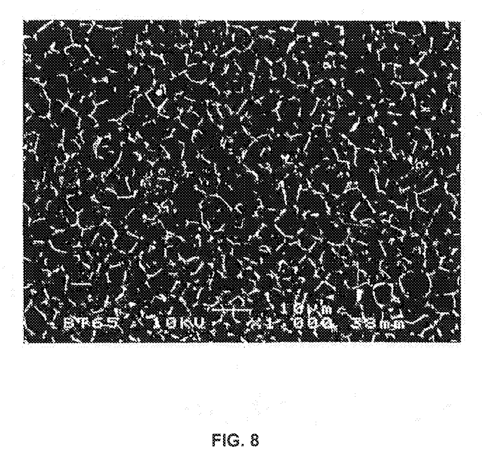

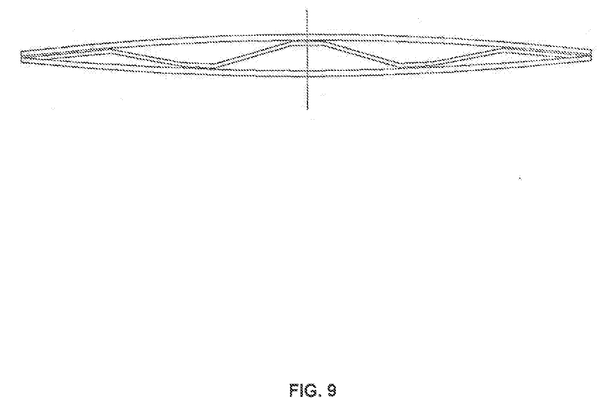

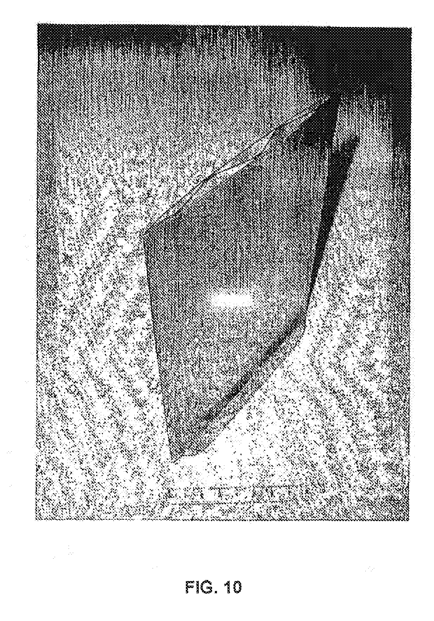

Fig.9 and Fig.10 show a cross-sectional view and a photograph of a finished article, respectively. Specimens were cut out from the finished article for metallographic analysis. Fig. 5 shows a bond microstructure at the periphery of the bond of workpieces joined through a pad, the microstructure being free of scores and a chain of micropores (see Fig.4 for comparison). Figs. 6, 7 and 8 show bond microstructures in the central part of the region bonded with the use of pads from a commercial sheet, with original SMC and NC structure, respectively. It is evident that the number and size of micropores were notably reduced when pads with original SMC structure were used. When pads with original NC structure were used only isolated micropores were present. It is further evident that the grain size in pads became the same as in the blank workpieces owing to the difference in the growth speed of grains having different original size. Holding the article under pressure after forming contributed to this result.

### References cited:

1. RU Application No.2002121285, F04D 29/38, 2004
2. GB Patent No.2095137, B21D 53/78, 1973
3. EP Patent No.0568201, B21D 53/78, 1993
4. Ishlinsky A.Yu., Ivlev D.D. Mathematical Theory of Plasticity, M., FIZMATLIT, 2001, 704 p.
5. Kachanov L.M. Fundamentals of Theory of Plasticity, M., Nauka, 1969, 420 p
6. Gurevich S.M. Reference Book On Welding of Non-Ferrous Metals, Kiev, Naukova Dumka, 1981, 608 p.
7. RU Patent No.2134308, C22F 1/18, 1999.

## Claims

1. A method of manufacturing an article by superplastic forming and diffusion welding from at least two workpieces of a titanium alloy, including: marking on a surface of at least one workpiece areas to be and not to be bonded; assembling the workpieces into a stack; heating the stack to a predetermined temperature T and applying a pressure of a predetermined value p from a press for diffusion welding of the workpieces together and produce a semifinished article; heating and supplying a pressurized working fluid into the interior of the semifinished article to superplastically form at least one of the workpieces to produce an article of a predetermined shape, **characterized in that** said diffusion welding is carried out through pads of a titanium alloy having a smaller flow stress than that in the workpieces, wherein mainly in the case when the article is made from three or more workpieces a bond preventing material is applied to at least a part of a surface of at least one of the workpieces at the areas not to be bonded.

2. The method of claim 1, wherein the pads are made from a commercial sheet, the pressure being applied in the process of heating the stack when a temperature of (T-100...150)°C is reached.

3. The method of claim 1, wherein pads are made from a commercial sheet with a prepared structure having a grain size of 0.5-1.0 µm, the pressure being applied in the process of heating the stack when a temperature of (T-150...200)°C is reached.

4. The method of claim 1, wherein pads are made from a commercial sheet with a prepared structure having a grain size of 0.1-0.5 µm, the pressure being applied in the process of heating the stack when a temperature of (T-200...250)°C is reached;

5. The method according to any one of claims 1,2,3,4, **characterized in that** after said forming the article is held under a working fluid pressure equal to or greater than p and at a temperature not lower than T for 30-60 min.

6. The method according to claim 5, **characterized in that** the article is held under the working fluid pressure immediately after said forming.

7. The method according to claim 1, **characterized in that** the pressure from a press is applied in conditions of external vacuum.
